# NOUVEAU FASCICULE DE BREVET EUROPEEN

(11) **EP 1 289 901 B2**
(45) Date de publication et mention de la décision concernant l'opposition: **14.12.2011**
(45) Mention de la délivrance du brevet: 27.09.2006
(21) Numéro de dépôt: 01945410.7
(22) Date de dépôt: 13.06.2001
(51) Int. Cl.: C03C 25/34

(54) **PRODUIT D'ISOLATION NOTAMMENT THERMIQUE CONTENANT UN LIANT A BASE DE RESINE FORMO-PHENOLIQUE ET SA FABRICATION**
WÄRMEISOLIERENDE MATERIALEN ENTHALTEND BINDEMITTEL AUF BASIS VON PHENOLFORMALDEHYDHARZ UND IHRE HERSTELLUNG
INSULATING PRODUCT IN PARTICULAR THERMAL CONTAINING A BINDER BASED ON PHENOL-FORMALDEHYDE RESIN AND METHOD FOR MAKING SAME

(30) Priorité: 13.06.2000 FR 0007535
(43) Date de publication de la demande: 12.03.2003
(73) Titulaire: SAINT-GOBAIN ISOVER, 92400 Courbevoie (FR)
(72) Inventeur: ESPIARD, Philippe, F-60270 Gouvieux (FR); MAHIEUXE, Bruno, F-60290 Neuilly sous Clermont (FR)
(74) Mandataire: Muller, René
(86) Numéro de dépôt international: PCT/FR2001/001824
(87) Numéro de publication internationale: WO 2001/096254

(56) Documents cités:
- EP-A- 0 148 050
- GB-A- 905 393
- US-A- 3 684 467
- US-A- 5 358 748

## Description

L'invention se rapporte au domaine des produits d'isolation, notamment thermique ou phonique, à base de laine minérale et d'un liant organique à base d'une résine phenol-formaldéhyde. Elle concerne plus particulièrement la réduction d'émissions de polluants divers au cours de la fabrication de tels produits à base de laine minérale comprend une première étape de fabrication de la laine elle-même par fibrage et étirage, et une étape de mise en forme dans laquelle la laine minérale est collectée sur un organe récepteur sous forme d'une nappe. Pour assurer la cohésion de la nappe, on projette sur la laine lors de son trajet vers l'organe récepteur une composition d'encollage, qui contient une résine thermodurcissable. La nappe ainsi traitée est ensuite soumise à un traitement thermique en étuve pour réticuler la résine et obtenir un produit présentant des propriétés désirées, telles que stabilité dimensionnelle, résistance mécanique, reprise d'épaisseur après compression, couleur homogène.

Les compositions d'encollage se présentent généralement sous la forme d'une composition aqueuse renfermant une résine formo-phénolique et des additifs tels que catalyseur de durcissement de la résine, silane promoteur d'adhérence, huiles minérales anti-poussières...

Pour que la composition soit apte à être distribuée le plus généralement par pulvérisation, il convient que la résine soit suffisamment diluable dans l'eau. A cette fin, on a coutume de conduire la réaction de condensation entre formaldéhyde et phénol en limitant le degré de condensation des monomères, pour éviter la formation de chaînes longues, peu hydrophiles qui réduisent la diluabilité. En conséquence, la résine contient une certaine proportion de monomères n'ayant pas réagi, en particulier le formaldéhyde dont la volatilité peut conduire à des émissions non désirables de composés organiques dans l'atmosphère de l'usine.

C'est pourquoi, on fait généralement réagir le produit de condensation formo-phénolique avec de l'urée qui piège le formaldéhyde libre en formant des produits de condensation non volatils. La présence d'urée dans la résine apporte en outre un avantage économique important lié à son faible coût, car on peut l'introduire en relativement grande quantité sans affecter sensiblement les qualités de la résine vis-à-vis notamment des propriétés mécaniques du produit final, en abaissant notablement le coût total de la résine.

On a néanmoins observé que cette solution n'était pas entièrement satisfaisante en ce qui concerne la pollution atmosphérique, car les produits de condensation urée-formaldéhyde se sont révélés peu stable à la chaleur, de sorte que lors de l'utilisation de la résine pour l'encollage de la laine minérale, au cours duquel la résine est soumise à des températures supérieures à 100°C, le produit de condensation urée-formaldéhyde redonne sous l'effet de la chaleur, de l'urée, du formaldéhyde et de l'ammoniac, qui sont libérés dans l'atmosphère de l'usine.

La présente invention a pour but de rendre la fabrication de produits isolants moins polluante, plus particulièrement en ce qui concerne les émissions d'ammoniac sur la ligne de fabrication, sans pénaliser le coût de production du produit isolant.

L'invention est fondée sur la constatation qu'il est possible de réduire significativement les émissions d'ammoniac à la fabrication d'un produit isolant tout en utilisant un encollage qui conserve une certaine proportion d'urée et qui est donc d'un coût compétitif.

A cet égard l'invention a pour objet un produit isolant à base de laine minérale encollée avec un liant à base d'une résine formo-phénolique selon la revendication 1.

Selon l'invention, on limite d'abord le taux de phénol libre en poussant la réaction de condensation à un degré suffisant pour une consommation presque complète de cette matière première minoritaire. Avec un rapport F/P supérieur à 1, mais pas trop haut, inférieur ou égal à 3,2, la condensation se fait en formant des espèces de poids moléculaire modérément élevé, avec par conséquent une consommation de formaldéhyde supérieure à celle qui conduirait à de très longues chaînes de condensats phénol-formol.

Ensuite, une fois la réaction de condensation du résol terminée, on capte les molécules de formaldéhyde restant présentes sous forme libre, au moyen d'urée dont la quantité peut être d'autant plus réduite que le taux de formol libre du résol est bas.

On peut ainsi limiter la proportion d'urée dans le mélange liant, tout en conservant des teneurs faibles en composés organiques volatils libres dans le liant. On parvient donc à limiter les émissions de composés organiques volatils tels que phénol et formol, tout en réduisant la quantité d'ammoniac dégagée sur la ligne de fabrication.

Pour contrôler le déroulement de la réaction de formation du résol dans les conditions requises pour l'invention, on mesure trois grandeurs caractéristiques :
- le taux de phénol et de formol libres qui caractérisent l'avancement de la réaction,
- la diluabilité du résol neutralisé qui caractérise la longueur des condensats formés.

Selon l'invention, le taux de phénol libre dans le résol avant ajout de l'urée est inférieur ou égal à 2,5% en poids de phénol par rapport au poids sec de résine, pour un résol d'extrait sec de l'ordre de 35 à 45%. De préférence le taux de phénol libre est inférieur ou égal à 2% par rapport au poids sec de résine, avantageusement à 1,7% par rapport au poids sec de résine. Il peut être notamment de l'ordre de 0,5 à 1,7%, par exemple de 0,7 à 1,6% par rapport au poids sec de résine.

Le taux de formaldéhyde libre dans le résol est inférieur ou égal à 25% en poids sec de résine pour un résol d'extrait sec entre 35 et 45. De préférence le taux de formaldéhyde libre est inférieur ou égal à 20% par rapport au poids sec de la résine, avantageusement à 15,5%, en particulier à 12%. Il peut être notamment de l'ordre de 2 à 4%.

La diluabilité du résol correspond au facteur de dilution maximal du résol pour lequel on n'observe pas la formation d'un trouble permanent de la dilution. On exprime la diluabilité par le volume d'eau, en pourcent du volume de résol, que l'on peut ajouter au résol avant de provoquer la formation d'un trouble permanent. Ainsi, une diluabilité de 1500% signifie que l'on peut diluer 10 ml de résine avec 15x10 ml d'eau sans que le mélange ne se trouble. De manière générale et selon l'invention, cette mesure est faite en utilisant pour la dilution de l'eau déionisée tempérée, c'est-à-dire une eau à température ambiante, de l'ordre de 15 à 25°C, généralement environ 20°C (dans cette plage de températures, la diluabilité ne varie pas de façon significative).

Selon l'invention, on contrôle le déroulement de la condensation en mesurant la diluabilité du résol neutralisé par l'acide sulfurique. En effet, on constate généralement que le résol synthétisé en milieu basique a une diluabilité élevée à pH basique (en général à pH 9) avec une relativement faible variation, même lorsqu'il renferme des espèces de poids moléculaire très élevé. Au contraire, quand on neutralise le résol avec de l'acide sulfurique, la diluabilité varie de manière nettement décroissante quand le poids moléculaire des condensats phénol-formol augmente. On peut ainsi suivre l'apparition de composés de poids moléculaire indésirable.

Selon l'invention, les résols utilisés sont donc caractérisés par une diluabilité supérieure à 500 et inférieure ou égale à 1500% à l'état neutralisé par l'acide sulfurique ; de préférence, la diluabilité est de plus de 500 à 1000% à l'état neutralisé. Par neutralisation, on entend l'ajout d'une quantité de H₂SO₄ suffisante pour réagir avec tous les hydroxyles OH⁻ introduits par le catalyseur basique.

De tels résols peuvent avantageusement être synthétisés en faisant réagir le phénol et le formaldéhyde, en présence d'un catalyseur basique tel que la soude, à une température de l'ordre de 50 à 80°C, notamment de 60 à 75°C, en particulier 70°C environ, pendant une durée de l'ordre de 80 à 200 minutes, notamment de 90 à 150 minutes, la durée étant d'autant plus courte que la température est élevée et/ou que le rapport F/P est faible. A cet égard, un rapport F/P est limité à 3,2 pour éviter des temps de réaction trop élevés.

Le catalyseur basique, connu en soi, notamment la soude mais aussi la potasse, la chaux ou la baryte, est en général utilisé en quantité correspondant à 6 à 20 mol d'équivalents hydroxyle OH⁻ pour 100 mol de phénol initial.
L'étape de condensation à chaud est généralement suivie d'un refroidissement progressif à la température ambiante.

Pour empêcher une poursuite indésirable de la réaction de condensation, est souhaitable de désactiver la catalyse basique en neutralisant le résol. Une neutralisation par l'acide sulfurique n'est pas indiquée, car elle abaisse la diluabilité au-dessous de 1500%, qui est en général le seuil garantissant une bonne aptitude à la mise en oeuvre sur ligne par pulvérisation.

Ainsi, le résol utilisé selon l'invention est avantageusement neutralisé par au moins un acide choisi parmi l'acide borique ou un borate équivalent (notamment borate d'ammonium, métaborate de sodium, tétraborate de sodium, polyborate d'aminoalcool), l'acide sulfamique ou un sulfamate équivalent, un acide aminé (notamment acide aspartique, acide glutamique, aminoacétique...). Ces acides ont en effet la propriété de modifier le résol de telle façon que sa diluabilité est plus élevée dans le milieu neutralisé ainsi obtenu que dans le milieu obtenu avec de l'acide sulfurique. La neutralisation se fait avantageusement jusqu'à obtention d'un pH de l'ordre de 7 à 9.

Le produit de neutralisation par l'un des acides précités d'un résol présentant les caractéristiques de l'invention a en général une diluabilité supérieure à 1000% et allant jusqu'à plus de 2000% (on a coutume de dire qu'une diluabilité supérieure à 2000% est infinie) juste après la neutralisation, et conserve une diluabilité supérieure ou égale à 1000% après 3 semaines de stockage à environ 12°C sous faible agitation.

En variante, le résol peut être neutralisé avec un acide quelconque mais en présence d'un émulsifiant tel qu'une gomme et/ou un tensioactif anionique, notamment les gommes guar et ghatti, ou éventuellement de la caséine. L'acide utilisé peut alors être choisi parmi tous les acides forts connus en soi, tels que l'acide sulfurique, l'acide chlorhydrique, mais aussi l'acide borique, l'acide sulfamique (ou les sels équivalents) ou un acide aminé.

La préparation d'un liant utilisable selon l'invention comprend le mélange à froid d'un résol tel que décrit précédemment avec de l'urée en quantité limitée. Selon l'invention, le mélange comprend 65 à 90 parties en poids de résol (comptabilisées en poids de matière sèche du résol) pour 35 à 10 parties en poids d'urée. Le mélange comprend au moins 65 parties, notamment de 70 à 85 parties en poids sec de résol pour au plus 35 parties, notamment de 15 à 30 parties en poids d'urée.

L'ajout d'urée peut se faire immédiatement après le refroidissement du résol, de préférence après la neutralisation, de façon à former un prémélange stable au stockage, utilisable ultérieurement pour la formulation de l'encollage, ou bien il peut se faire au moment même de la formulation de l'encollage avant une campagne de fabrication. L'utilisation d'urée en prémélange peut toutefois être préférée parce qu'elle engendre moins d'émissions de polluants, y compris de l'ammoniac sur la ligne de fabrication.

L'urée n'est pas le seul composé utilisable comme piégeur de formaldéhyde et l'on peut en particulier ajouter en outre du sulfite d'ammonium, à raison de 1 à 20 parties en poids, notamment de 1 à 10 parties en poids pour 100 parties en poids sec de mélange résol+urée. Il s'est révélé que le sulfite d'ammonium n'affecte pas très notablement les émissions d'ammoniac, en dépit de l'apport d'ions ammonium qu'il constitue dans l'encollage. Toutefois, il est préférable de limiter la teneur en sulfite d'ammonium à environ 1 à 5 parties en poids, notamment autour de 2 parties en poids pour 100 parties en poids de matière sèche de résine et d'urée.

La composition de l'encollage peut en outre renfermer les autres ingrédients habituels, tels que :
- du sulfate d'ammonium comme catalyseur de durcissement, de préférence à raison de 1 à 5 parties en poids pour 100 parties en poids de matière sèche de résine et d'urée ;
- une ou des silicones ;
- une ou des huiles minérales.

Ordinairement, une composition d'encollage peut comprendre en outre de l'ammoniaque. Pour réduire au minimum les émissions d'ammoniac gazeux sur la ligne de fabrication, il est préférable que l'encollage soit totalement exempt d'ammoniaque. Toutefois, il est apparu qu'une teneur en ammoniaque inférieure ou égale à 5 parties en poids de solution à 20% pour 100 parties en poids de matière sèche résine+urée permet de rester en dessous du seuil admissible pour une fabrication dans de bonnes conditions.

La proportion d'encollage dans le produit isolant est généralement de l'ordre de 1 à 12% en poids de matière sèche par rapport au poids total de laine minérale.

L'invention a également pour objet une composition d'encollage telle que décrite ci-dessus.

Selon un autre aspect, l'invention a pour objet l'utilisation d'une composition d'encollage telle que décrite ci-dessus pour réduire les émissions d'ammoniac lors de la fabrication d'un produit isolant.

Selon l'invention, on parvient à limiter les émissions d'ammoniac à moins de 10 grammes d'ammoniac par kilogramme de laine minérale, en particulier moins de 8 g/kg, notamment à au plus 5 g/kg.

L'invention a donc également pour objet un procédé de fabrication d'un produit isolant à base de laine minérale encollée avec un liant formo-phénolique tel que décrit précédemment, dans lequel les émissions d'ammoniac cumulées à toutes les étapes de fabrication sont inférieures à 10 grammes d'ammoniac par kilogramme de laine minérale.

L'invention est illustrée par les exemples suivants.

### EXEMPLE 1

On prépare une résine formo-phénolique en introduisant dans un réacteur sous agitation qui sera maintenue pendant tout le cycle de fabrication, 100 kg de phénol et 241 kg de formaldéhyde en solution aqueuse à 37%, et l'on porte à 45°C la température dans le réacteur. Le rapport molaire formol/phénol est de 2,8.

Tout en maintenant la température à 45°C, on introduit de manière régulière sur une durée de 30 minutes 12,7 kg d'hydroxyde de sodium en solution aqueuse à 47%, soit un rapport pondéral soude/phénol de 6%, soit un rapport molaire de 14,1%.

Immédiatement après la fin de cette addition, on élève la température jusqu'à 70°C en 30 minutes, et on maintient cette température pendant une durée d'environ 120 minutes. Au terme de cette durée, la diluabilité du résol neutralisé par de l'acide sulfurique est de 1200%.

On fait alors refroidir le réacteur et le mélange réactionnel de 70°C à 35 ° C en 35 minutes.

On ajuste alors le pH du milieu réactionnel à 7,2 avec de l'acide sulfamique en solution aqueuse à 15% (environ 88 kg). L'opération prend 90 minutes environ, tout en refroidissant le mélange réactionnel à 20°C.

Le résol neutralisé présente un taux de formol libre de 2,5% en poids du résol, soit 6,8% par rapport au poids de matière sèche de la résine, et un taux de phénol libre de 0,5% en poids du résol, pour un extrait sec de 37%, soit 1,4% par rapport au sec.

La diluabilité du résol neutralisé par l'acide sulfamique est infinie (supérieure à 2000%) et le reste pendant une semaine de stockage à 12°C sous faible agitation. Après trois semaines de stockage dans ces conditions, la diluabilité est de 1000%.

Cette résine est utilisée pour formuler quatre compositions d'encollage, dont trois à base d'un prémélange de résol et d'urée, dont les formules sont présentées au **tableau 1** ci-après.

Ces encollages sont employés dans une ligne de fabrication de produits isolants à base de laine de verre : l'encollage est dilué de façon à être pulvérisé sur les filaments de laine de verre avant leur réception sur un tapis convoyeur contenu dans une chambre de réception munie de moyens d'aspiration pour forcer la laine de verre sur le tapis. Le tapis convoyeur passe dans une zone de mise en forme où la laine de verre peut être comprimée verticalement et éventuellement longitudinalement, puis achemine la masse mise en forme dans une étuve de réticulation du liant où règne une température de 280°C environ.

La teneur en liant du produit est mesurée par la perte au feu de ce dernier, qui est ici de 4,5% du poids total de produit.

Les émissions gazeuses sont prélevées en tous les points de la ligne de fabrication, notamment dans la zone de formage, à l'entrée et à la sortie de l'étuve, et l'on dose le phénol, le formol et l'ammoniac contenus dans ces prélèvements. Les émissions cumulées sur toute la ligne figurent dans le tableau 1 ci-après.

L'essai 1 montre qu'en ajoutant du sulfite d'ammonium, certes le niveau d'émissions d'ammoniac s'élève un peu en conséquence de la présence des ions ammonium, mais le niveau de formaldéhyde libre est remarquablement bas.

Une variante avantageuse consiste à supprimer l'ammoniaque en conservant le sulfite d'ammonium, en quantité éventuellement réduite.

L'essai 2, qui utilise un prémélange résine+urée et ne fait pas appel à l'ammoniaque, donne de très bons résultats d'émissions tant en ce qui concerne le formol que l'ammoniac.

L'ajout d'ammoniaque dans le prémélange de l'essai 3 permet de réduire le niveau de formaldéhyde émis, avec une teneur en ammoniac émis qui reste tolérable.

Enfin, l'ajout de sulfite d'ammonium dans l'essai 4 permet de réduire en outre le niveau de formol émis, avec une teneur en ammoniac émis qui reste aussi tolérable.

**TABLEAU 1**

| Exemple (essai) | Formulation (Résine/Urée)*/Sulfate d'ammonium/Ammoniaque 20%/Sulfite d'ammonium * : (Résine/Urée) entre parenthèses en cas de prémélange | Emissions (g/kg de verre) | | |
|---|---|---|---|---|
| | | Phénol libre | Formol | Ammoniac |
| 1 (1) | 80 / 20 / 2,5 / 5 / 5 | 0,7 | 0,2 | 1,2 |
| 1 (2) | (75 / 25) / 1 / 0 / 0 | 0,6 | 0,4 | 1,2 |
| 1 (3) | (75 / 25 / 2 ammoniaque 20%) / 2 / 0 / 0 | 0,6 | 0,3 | 1,2 |
| 1 (4) | (75 / 25 / 2 ammoniaque 20%) / 2 / 0 / 2 | 0,6 | 0,3 | 0,9 |
| 2 (1) | (70 / 30 / 2 ammoniaque 20%) / 2 / 3 / 0 | 0,4 | 0,6 | 1,4 |
| 2 (2) | (70 / 30 / 2 ammoniaque 20%) / 2 / 0 / 0 | 0,3 | 0,6 | 1,3 |

### EXEMPLE 2

On prépare une résine formo-phénolique en introduisant dans un réacteur sous agitation qui sera maintenue pendant tout le cycle de fabrication, 100 kg de phénol et 276 kg de formaldéhyde en solution aqueuse à 37%, et l'on porte à 45°C la température dans le réacteur. Le rapport molaire formol/phénol est de 3,2.

Tout en maintenant la température à 45°C, on introduit de manière régulière sur une durée de 30 minutes 12,7 kg d'hydroxyde de sodium en solution aqueuse à 47%, soit un rapport pondéral soude/phénol de 6%, soit un rapport molaire de 14,1%.

Immédiatement après la fin de cette addition, on élève la température jusqu'à 70°C en 30 minutes, et on maintient cette température pendant une durée d'environ 130 minutes. Au terme de cette durée, la diluabilité du résol neutralisé par de l'acide sulfurique est de 1200%.

On fait alors refroidir le réacteur et le mélange réactionnel de 70°C à 35°C en 35 minutes.

On ajuste alors le pH du milieu réactionnel à 7,3 avec de l'acide sulfamique en solution aqueuse à 15% (environ 88 kg). L'opération prend 90 minutes environ, tout en refroidissant le mélange réactionnel à 20°C.

Le résol neutralisé présente un taux de formol libre de 2,5%, et un taux de phénol libre de 0,5% en poids du résol, pour un extrait sec de 36%.

La diluabilité du résol neutralisé par l'acide sulfamique est de 1800% et passe à 1300% après trois semaines de stockage à 12°C sous faible agitation.

Cette résine est utilisée pour formuler deux compositions d'encollage à base d'un prémélange de résol et d'urée, dont les formules sont présentées au **tableau 1.**

Ces encollages sont utilisés comme dans l'exemple 1 pour la fabrication de produit isolant à base de laine de verre, et les résultats de mesures des émissions gazeuses sont reportés au **tableau 1.**

L'essai 1 montre qu'en dépit de la présence d'ammoniaque dans l'encollage, le niveau d'ammoniac émis reste tolérable, et peut très simplement être réduit si l'on supprime l'ammoniaque comme le montre la suppression partielle d'ammoniaque dans l'essai 2.

Le niveau des émissions de formol et de phénol dans ces deux essais sont par ailleurs très satisfaisants.

## Revendications

1. Produit isolant à base de laine minérale encollée avec un liant à base d'une résine formo-phénolique, **caractérisé en ce que** le liant comprend en mélange :
- 65 à 90 parties en poids d'un résol phénol-formaldéhyde présentant un taux de formaldéhyde libre inférieur ou égal à 25% en poids par rapport au poids sec de résine et un taux de phénol libre inférieur ou égal à 2,5% en poids par rapport au poids sec de résine obtenu par condensation en milieu basique de phénol (P) et de formaldéhyde (F) dans un rapport molaire F/P de l'ordre de 2,5 à 3,2 jusqu'à ce que le produit de condensation neutralisé par de l'acide sulfurique ait une diluabilité, mesurée à une température de l'ordre de 15 à 25°C avec de l'eau déionisée, supérieure à 500% et inférieure ou égale à 1500% ;
- 10 à 35 parties en poids d'urée.

2. Produit isolant selon la revendication 1, **caractérisé en ce que** le taux de phénol libre du résol avant ajout de l'urée est inférieur ou égal à 2% par rapport au poids sec de résine, notamment de l'ordre de 0,5 à 1,7% par rapport au poids sec de résine.

3. Produit isolant selon la revendication 1 ou 2, **caractérisé en ce que** le taux de formaldéhyde libre avant ajout de l'urée est inférieur ou égal à 20% par rapport au poids sec de résine.

4. Produit isolant selon l'une quelconque des revendications précédentes, **caractérisé en ce que** le résol est obtenu en faisant réagir le phénol et le formaldéhyde, en présence d'un catalyseur basique tel que la soude, à une température de l'ordre de 50 à 80°C, notamment de 60 à 75°C, en particulier 70°C environ, pendant une durée de l'ordre de 80 à 200 minutes, notamment de 90 à 150 minutes.

5. Produit isolant selon l'une quelconque des revendications précédentes, **caractérisé en ce que** le résol est neutralisé par au moins un acide choisi parmi l'acide borique ou un borate équivalent, l'acide sulfamique ou un sulfamate équivalent, un acide aminé.

6. Produit isolant selon l'une quelconque des revendications précédentes, **caractérisé en ce que** le mélange comprend 70 à 85 parties en poids sec de résol pour 15 à 30 parties en poids d'urée.

7. Produit isolant selon l'une quelconque des revendications précédentes, **caractérisé en ce que** le liant comprend en outre de 1 à 10 parties en poids de sulfite d'ammonium pour 100 parties en poids sec de résol et d'urée.

8. Composition d'encollage pour produit isolant, **caractérisée en ce qu'**elle comprend en mélange :
- 65 à 90 parties en poids d'un résol phénol-formaldéhyde présentant un taux de formaldéhyde libre inférieur ou égal à 25% en poids par rapport au poids sec de résine et un taux de phénol libre inférieur ou égal à 2,5% en poids par rapport au poids sec de résine obtenu par condensation en milieu basique de phénol (P) et de formaldéhyde (F) dans un rapport molaire F/P de l'ordre de 2,5 à 3,2 jusqu'à ce que le produit de condensation neutralisé par de l'acide sulfurique ait une diluabilité, mesurée à une température de l'ordre de 15 à 25°C avec de l'eau déionisée, supérieure à 500% et inférieure ou égale à 1500% ;
- 10 à 35 parties en poids d'urée.

9. Composition d'encollage selon la revendication 8, **caractérisée en ce que** le mélange comprend 70 à 85 parties en poids sec de résol pour 15 à 30 parties en poids d'urée.

10. Composition d'encollage selon la revendication 8 ou 9, **caractérisée en ce qu'**elle comprend en outre de 1 à 20 parties en poids de sulfite d'ammonium pour 100 parties en poids sec de résol et d'urée.

11. Utilisation d'une composition d'encollage selon l'une quelconque des revendications 8 à 10 pour réduire les émissions d'ammoniac lors de la fabrication d'un produit isolant.

12. Procédé de fabrication d'un produit isolant à base de laine minérale encollée avec un liant formo-phénolique, **caractérisé en ce que** l'on pulvérise sur la laine minérale une composition d'encollage selon l'une quelconque des revendications 8 à 10 et **en ce que** les émissions d'ammoniac cumulées à toutes les étapes de fabrication sont inférieures à 10 grammes d'ammoniac par kilogramme de laine minérale.

## Claims

1. Insulating product based on mineral wool sized with a binder based on a phenol-formaldehyde resin, **characterized in that** the binder comprises, as a mixture:
- 65 to 90 parts by weight of a phenol-formaldehyde resol having a free formaldehyde content of less than or equal to 25% by weight with respect to the dry weight of resin and a free phenol content of less than or equal to 2.5% by weight with respect to the dry weight of resin, obtained by condensation in basic medium of phenol (P) and formaldehyde (F) in an F/P molar ratio of around 2.5 to 3.2 until the condensation product neutralized by sulphuric acid has a water dilutability, measured at a temperature of around 15 to 25°C with deionized water, of greater than 500% and less than or equal to 1500%; and
- 10 to 35 parts by weight of urea.

2. Insulating product according to Claim 1, **characterized in that** the free phenol content of the resol before addition of urea is less than or equal to 2% with respect to the dry weight of resin, especially around 0.5 to 1.7% with respect to the dry weight of resin.

3. Insulating product according to Claim 1 or 2, **characterized in that** the free formaldehyde content before addition of urea is less than or equal to 20% with respect to the dry weight of resin.

4. Insulating product according to any one of the preceding claims, **characterized in that** the resol is obtained by making phenol react with formaldehyde in the presence of a basic catalyst, such as sodium hydroxide, at a temperature of around 50 to 80°C, especially 60 to 75°C, in particular about 70°C, for a time of around 80 to 200 minutes, especially 90 to 150 minutes.

5. Insulating product according to any one of the preceding claims, **characterized in that** the resol is neutralized with at least one acid chosen from boric acid or an equivalent borate, sulphamic acid or an equivalent sulphamate, or an amino acid.

6. Insulating product according to any one of the preceding claims, **characterized in that** the mixture comprises 70 to 85 parts by dry weight of resol per 15 to 30 parts by weight of urea.

7. Insulating product according to any one of the preceding claims, **characterized in that** the binder furthermore includes from 1 to 10 parts by weight of ammonium sulphite per 100 parts by dry weight of resol and of urea.

8. Sizing composition for an insulating product, **characterized in that** it comprises, as a mixture:
- 65 to 90 parts by weight of a phenol-formaldehyde resol having a free formaldehyde content of less than or equal to 25% by weight with respect to the dry weight of resin and a free phenol content of less than or equal to 2.5% by weight with respect to the dry weight of resin obtained by the condensation in basic medium of phenol (P) and formaldehyde (F) in an F/P molar ratio of around 2.5 to 3.2 until the condensation product neutralized with sulphuric acid has a water dilutability, measured at a temperature of around 15 to 25°C with deionized water, of greater than 500% and less than or equal to 1500%; and
- 10 to 35 parts by weight of urea.

9. Sizing composition according to Claim 8, **characterized in that** the mixture comprises 70 to 85 parts by dry weight of resol per 15 to 30 parts by weight of urea.

10. Sizing composition according to Claim 8 or 9, **characterized in that** it furthermore includes 1 to 20 parts by weight of ammonium sulphite per 100 parts by dry weight of resol and of urea.

11. Use of a sizing composition according to any one of Claims 8 to 10 for reducing the emissions of ammonia gas during the manufacture of an insulating product.

12. Process for manufacturing an insulating product based on mineral wool sized with a phenol-formaldehyde binder, **characterized in that** a sizing composition according to any one of Claims 8 to 10 is sprayed onto the mineral wool and **in that** the cumulative emissions of ammonia gas over all the manufacturing steps are less than 10 grams of ammonia gas per kilogram of mineral wool.

## Patentansprüche

1. Dämmstoff auf Basis von Mineralwolle, die mit einem Phenolformaldehydharz gebunden ist, **dadurch gekennzeichnet, dass** das Bindemittel folgende Mischung umfasst:
- 65 bis 90 Gewichtsteile eines Phenolformaldehydresols, welches einen Gehalt an freiem Formaldehyd von kleiner oder gleich 25 Gew.-%, bezogen auf das Harztrockengewicht, und einen Gehalt an freiem Phenol von kleiner oder gleich 2,5 Gew.-%, bezogen auf das Harztrockengewicht, aufweist, wobei das Harz erhalten wird durch Kondensation von Phenol (P) und Formaldehyd (F) im basischen Milieu in einem Molverhältnis F/P im Bereich von 2,5 bis 3,2, bis das mit Schwefelsäure neutralisierte Kondensationsprodukt eine Wasserverdünnbarkeit, gemessen bei einer Temperatur im Bereich von 15 bis 25°C mit vollentsalztem Wasser größer als 500% und kleiner oder gleich 1500% aufweist;
- 10 bis 35 Gewichtsteile Harnstoff.

2. Dämmstoff nach Anspruch 1, **dadurch gekennzeichnet, dass** der Gehalt an freiem Phenol im Resol vor Zugabe des Harnstoffes kleiner oder gleich 2%, bezogen auf das Harztrockengewicht, insbesondere im Bereich von 0,5 bis 1,7 %, bezogen auf das Harztrockengewicht, ist.

3. Dämmstoff nach Anspruch 1 oder 2, **dadurch gekennzeichnet, dass** der Gehalt an freiem Formaldehyd vor Zugabe des Harnstoffes kleiner oder gleich 20%, bezogen auf das Harztrockengewicht, ist.

4. Dämmstoff nach einem der vorhergehenden Ansprüche, **dadurch gekennzeichnet, dass** das Resol erhalten wird, indem man Phenol mit Formaldehyd in Gegenwart eines basischen Katalysators, wie Natriumhydroxid, bei einer Temperatur im Bereich von 50 bis 80°C, insbesondere 60 bis 75°C, vorzugsweise ca. 70°C, während einer Dauer im Bereich von 80 bis 200 min, insbesondere von 90 bis 150 min, umsetzt.

5. Dämmstoff nach einem der vorhergehenden Ansprüche, **dadurch gekennzeichnet, dass** das Resol mit wenigstens einer Säure, ausgewählt aus: Borsäure oder einem Boratäquivalent, Sulfaminsäure oder einem Sulfamatäqivalent, einer Aminosäure, neutralisiert wird.

6. Dämmstoff nach einem der vorhergehenden Ansprüche, **dadurch gekennzeichnet, dass** die Mischung 70 bis 85 Trockengewichtsteile Resol auf 15 bis 30 Gewichtsteile Harnstoff enthält.

7. Dämmstoff nach einem der vorhergehenden Ansprüche, **dadurch gekennzeichnet, dass** das Bindemittel zusätzlich von 1 bis 10 Gewichtsteilen Ammoniumsulfit auf 100 Trockengewichtsteile Resol und Harnstoff enthält.

8. Encollage-Zusammensetzung für Dämmstoffe, **dadurch gekennzeichnet, dass** sie folgende Mischung umfasst:
- 65 bis 90 Gewichtsteile eines Phenolformaldehydresols, welches einen Gehalt an freiem Formaldehyd von kleiner oder gleich 25 Gew.-%, bezogen auf das Harztrockengewicht und einen Gehalt an freiem Phenol von kleiner oder gleich 2,5 Gew.-%, bezogen auf das Harztrockengewicht aufweist, wobei das Harz erhalten wird durch Kondensation von Phenol (P) und Formaldehyd (F) im basischen Milieu in einem Molverhältnis F/P im Bereich von 2,5 bis 3,2, bis das mit Schwefelsäure neutralisierte Kondensationsprodukt eine Wasserverdünnbarkeit, gemessen bei einer Temperatur im Bereich von 15 bis 25°C mit vollentsalztem Wasser von größer als 500% und kleiner oder gleich 1500% aufweist;
- 10 bis 35 Gewichtsteile Harnstoff.

9. Encollage-Zusammensetzung nach Anspruch 9, **dadurch gekennzeichnet, dass** die Mischung 70 bis 85 Trockengewichtsteile Resol auf 15 bis 30 Gewichtsteile Harnstoff enthält.

10. Encollage-Zusammensetzung nach Anspruch 9 oder 10, **dadurch gekennzeichnet, dass** sie zusätzlich 1 bis 20 Gewichtsteile Ammoniumsulfit auf 100 Trockengewichtsteile Resol und Harnstoff enthält.

11. Verwendung der Encollage-Zusammensetzung gemäß einem der Ansprüche 8 bis 10, zur Verminderung der Ammoniakemission bei der Herstellung eines Dämmstoffes.

12. Verfahren zur Herstellung eines Dämmstoffes auf Basis von mit einem Phenol-Formaldehyd-Bindemittel gebundener Mineralwolle, **dadurch gekennzeichnet, dass** man auf die Mineralwolle eine Encollage-Zusammensetzung gemäß einem der Ansprüche 8 bis 10 sprüht und wodurch die Gesamtheit der Ammoniakemissionen über sämtliche Stufen der Herstellung unterhalb von 10 Gramm Ammoniak pro Kilogramm Mineralwolle betragen.
